(19) **Europäisches Patentamt**

**European Patent Office**

**Office européen des brevets**

(11) **EP 0 708 552 B1**

(12) **EUROPEAN PATENT SPECIFICATION**

(45) Date of publication and mention
of the grant of the patent:
**02.05.2002 Bulletin 2002/18**

(51) Int Cl.[7]: **H04N 1/41**

(21) Application number: **95307377.2**

(22) Date of filing: **17.10.1995**

(54) **Image processing apparatus and method thereof**

Bildverarbeitungsgerät und -verfahren

Appareil et procédé de traitement d'images

(84) Designated Contracting States:
**DE FR GB**

(30) Priority: **19.10.1994 JP 25347594**

(43) Date of publication of application:
**24.04.1996 Bulletin 1996/17**

(73) Proprietor: **CANON KABUSHIKI KAISHA
Tokyo (JP)**

(72) Inventor: **Hirabayashi, Yasuji,
c/o Canon Kabushiki Kaisha
Tokyo (JP)**

(74) Representative:
**Beresford, Keith Denis Lewis et al
BERESFORD & Co.
2-5 Warwick Court,
High Holborn
London WC1R 5DH (GB)**

(56) References cited:
**EP-A- 0 042 981          FR-A- 2 308 262
FR-A- 2 573 229**

• **9th International Conference on Pattern
Recognition, 14-17 November 1988, Rome, Italy,
vol. 1, 1988, IEEE (US) pages 297-299
XP000043356**
• **JOURNAL OF ELECTRONIC IMAGING, vol. 1, no.
1, January 1992, BELLINGHAM, WA (US) , pages
5-21, XP000323323 S. J. URBAN: "Review of
standards for electronic imaging for facsimile
systems"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an image processing apparatus and method for encoding and decoding an input binary image.

Hitherto, various image encoding systems have been proposed. Most of the systems are based on a fundamental technique in the field of such encoding system, and some of the systems are based on an advanced complex technology combined with the foregoing fundamental technique. As of today, systems such as MMR, JBIG, JPEG, MPEG and the like belonging to an International Standardized System correspond to such latter advanced system.

A brief description is given hereinafter of the JBIG and JPEG systems. The JBIG system regulates a system of hierarchical encoding of a binary image. Image data are "losslessly" encoded so that a reproduced image is the same as the original image. In this regard, the JBIG is the same as the MH, MR or MMR systems utilized in facsimile apparatus. An advantage of the JBIG system as against a facsimile system is that, in the facsimile system, the compression efficiency for a pseudo halftone image having a different statistic distribution results in bad efficiency because this system utilizes run-length encoding based on run statistics while in the JBIG system the foregoing pseudo halftone image can be also compressed because this system utilizes arithmetic encoding.

The JPEG system is a compression system for multi-value (or multi-level) gradation images, and uses non-reversible encoding. This system can vary a compression ratio depending on set parameters and the quality of a reproduced image varies in correspondence with such variation of the compression ratio. The JPEG system cannot "losslessly" encode data. However, it is possible to obtain a reproduced image of such a quality that deterioration with respect of to original cannot be visually detected.

Next, the applicable fields of the JBIG, JPEG and run-length encoding systems will be briefly described. Since the oldest practical run-length encoding system is a reversible encoding system for binary data, basically any kind of digital data can be dealt with. However, if it is desired to perform the most effective compression, run-length encoding is still the system best suited to the compression of binary image data for a facsimile apparatus or the like. On the other hand, although some problems remain in the efficiency, it is possible to utilize run-length encoding for multi-value image data. As to practical use, for example, if a facsimile apparatus only has a CODEC, transfer of multi-value gradation image data utilizing the provided CODEC to effect lossless compression is possible. In this case, the multi-value data is separated into bit planes and each of the separated bit planes is encoded. Separating a multi-value image into bit planes causes the spatial correlation to become weak except for the most significant bit. Thus, when this method is utilized, generally the multi-value data is converted to gradation data utilizing a gray code. In this way, the multi-value data can be losslessly encoded. However, even if the gray code is utilized as mentioned above, entropy becomes extremely high for the lower bit and it becomes difficult to obtain efficient compression.

The JBIG system which is similar to the run-length encoding system in providing lossless encoding of binary data can be utilized not only for encoding of an image which is susceptible to run-length encoding but also, because it adopts hierarchical encoding, so-called soft-copying communication (communication of images between display terminals, used to get access to a data base including images).

As described above, since the compression of the JBIG system does not depend on any statistical distribution of the binary data, any kind of source data can be compressed, and the compression efficiency in the worst situation becomes 1. Therefore, even if the source data is an image which does not include a large amount of correlation/redundancy, a compression effect can be obtained. This fact means that the JBIG system can be reliably used even if a great deal of data exists if there is no other effective reversible compression means.

The JPEG system is based on a fundamentally different concept from the foregoing two systems because the JPEG system is a non-reversible compression system. Therefore, this system is limited to use where non-reversible compression may be adopted. Since the JPEG system encodes data by maximizing the use of redundancy in a multi-value gradation image, it is impossible to apply this system to the encoding of a binary image.

Nowadays, because facsimile apparatuses are widely used, techniques for encoding binary images have become more important. The encoding system utilized, nowadays, in this field is the run-length encoding system, and the encoding system to be utilized in future in this field is the JBIG system.

Even if one of these systems is utilized, a large code compression ratio with the almost same level can be obtained in encoding character images which have been treated conventionally. In this case, the compression ratio may be about one in several tens.

Recently, the need to transfer a pseudo halftone image has arisen more frequently in accordance with the great improvement in the resolution of reading apparatus (scanner) and recording apparatus (printer). Originally, an image with low entropy produced using a dither method has been utilized. However, recently, a pseudo halftone image produced using random-dots generated by an ED (error diffusion) method or a MD (mean difference minimization) method has become widely used. However if random-dots having an extremely high entropy are run-length encoded, in the worst case the amount of data representing the code length becomes several times as long as that of the original unencoded image. If a random-dot image is encoded by the JBIG system, it is possible to compress data as mentioned above. However, in this case, the compression ratio does not exceed 2 and in most cases the compression ratio is 0.1 to 0.9. This means that the compression ratio of an entire image is considerably reduced if only a small-sized pseudo halftone image portion is included in an ordinary character image. This is because character data occupying almost all of an image is compressed to one part in several tens of parts, while the pseudo halftone image occupying only about 10% of an entire image is compressed to only about 0.6, so that code resulting from a pseudo halftone image becomes more important when comparing the code condition.

In the JBIG system, pseudo halftone image data can be compressed a little. However, when the run-length encoding system is utilized, the size of pseudo halftone image data portion will often be increased inversely. Therefore, the pseudo halftone image data becomes more influential.

EP-A-0042981 corresponds to CA-1179778 and describes a method for encoding signals obtained by scanning an image comprising text and pictures wherein different encoding techniques are applied to the text and pictures.

An object of the present invention is to enable effective compression of binary image data which includes a pseudo halftone image.

According to the present invention, there is provided an image processing apparatus as set out in claim 1. The present invention also provides a decoding apparatus as set out in claim 8.

In another aspect, the present invention provides a processing method as set out in claim 12. The present invention also provides a decoding method as set out in claim 19. The present invention also provides a computer storage medium as set out in claim 23.

Other aspects and features of the present invention will become apparent from the following embodiments and the attached drawings.

BRIEF DESCRIPTION OF THE DRAWINGS

Fig. 1 is an entire block diagram of an encoder and a decoder of a binary image common to first to third embodiments of the present invention;
Fig. 2 shows the cutting out of a pseudo
    halftone image from an input binary image as a rectangular region;
Fig. 3 is a block diagram showing an example of a region divider 2;
Fig. 4 is a view for explaining an operation of a LUT 19 shown in Fig. 3;
Fig. 5 indicates coefficient matrix utilized in generating multi-value image data from a binary image;
Fig. 6 indicates code data output to a transmission path from a multiplexer 7;
Fig. 7 shows an example of a modified block of an encoder shown in Fig. 1;
Fig. 8 shows the designation of a region of an input binary image; and
Fig. 9 shows an example of a modified encoder shown in Fig. 1, which enables to designation of a region and encoding parameters indicated in Fig. 8.

DETAILED DESCRIPTION OF THE PREFERRED EMBODIMENTS

[First Embodiment]

In an embodiment of the present invention described hereinafter, a binary image which includes a binary pseudo expressed halftone image (referred to as a pseudo halftone image hereinafter) is divided into a region of a pseudo halftone image portion and a region of another portion, and a non-reversible multi-value (or multi-level) encoding is conducted on the pseudo halftone image portion after generating multi-value image data, while a binary encoding is conducted on another portion. Thereafter, region division information is generated together with codes obtained in the above-mentioned manner. As a result, the entire compression efficiency is improved by conducting a non-reversible encoding on the pseudo halftone image portion. In case of decoding, multi-value encoded data is re-binarized after decoding. Thus, processed data is superimposed on the ordinary binary decoded image in accordance with the region division information to complete the output.

Embodiments of the present invention will be described in detail hereinafter with reference to the accompanying drawings.

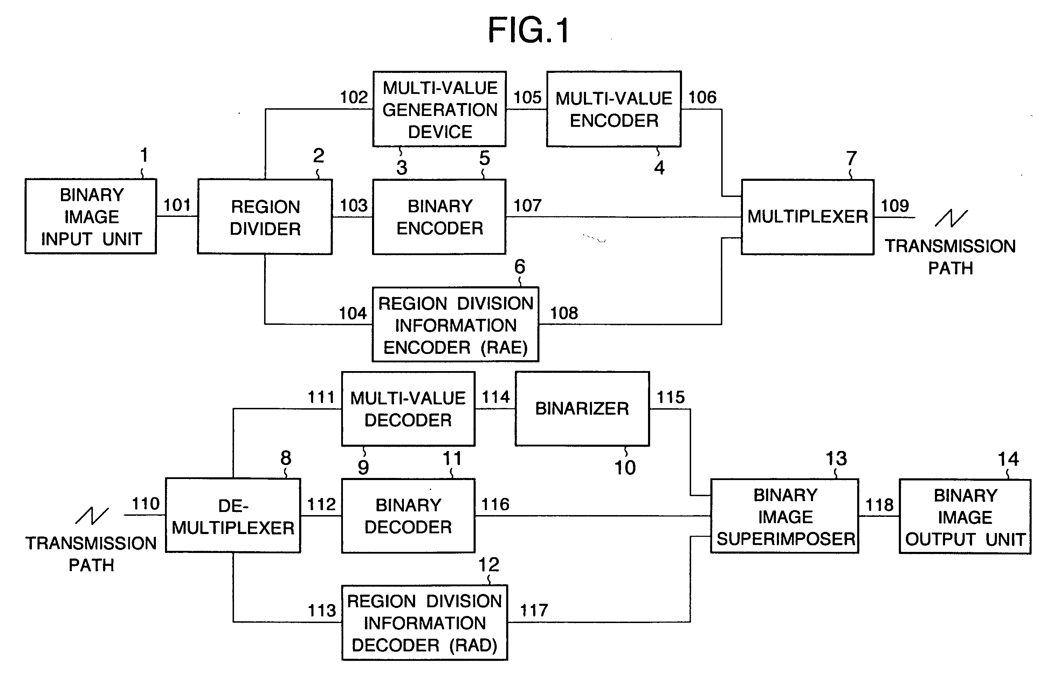

Fig. 1 is an entire block diagram of a binary image encoder/decoder of the present embodiment.

In Fig. 1, a binary image input unit 1 receives binary image data, a region divider 2 divides an input binary image to be processed into separate regions or portions, a multi-value generation device 3 generates multi-value image data from the binary image data, a multi-value encoder 4 encodes the multi-value image data, a binary encoder 5 encodes the binary image data, a region division information encoder 6 (referred to as a RAE hereinafter) encodes region division information generated when a region is divided, a multiplexer 7 multiplexes the plural types of data of the outputs of the multi-value encoder 4, binary encoder 5 and RAE 6, a demultiplexer 8 demultiplexes data from the transmission path 109 and outputs them to target devices for each type data, a multi-value decoder 9 corresponds to the multi-value encoder 4, a binarizer 10 converts the multi-value image data into the binary image data, a binary decoder 11 corresponds to the binary encoder 5, a region division information decoder 12 (referred to as a RAD hereinafter) corresponds to the RAE 6, a binary image superimposer 13 superimposes the output of the binarizer 10 and binary decoder 116 in accordance with the RAD 12 output and a binary image output unit 14 outputs the superimposed binary image data.

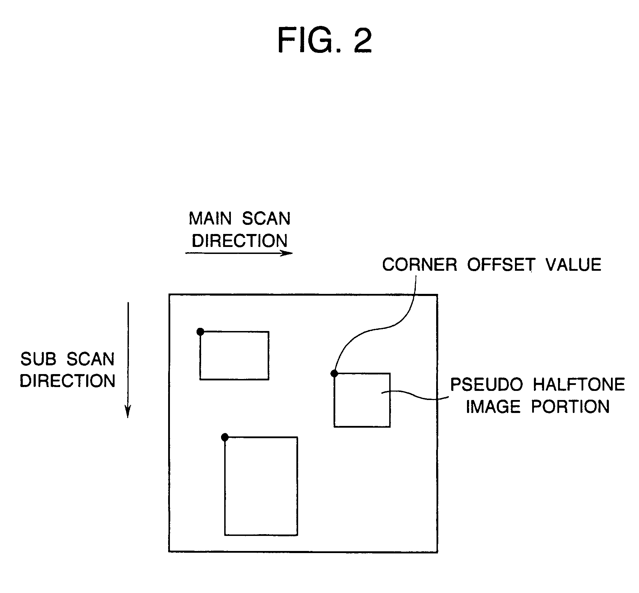

Binary image data 101 supplied by the binary image input unit 1 is divided into a pseudo halftone image portion and another portion in the region divider 2. An example of the region divider will be described later. At this time, it is assumed that an image which is determined to be a pseudo halftone image portion is separated or cut out as a rectangular shaped portion and at the same time region division information 104 such as a corner offset value (that is the coordinates of a corner previously selected from one of the four corners of the cut-out rectangular portion relative to the rectangular screen region shown in Fig. 2, the numbers of cut out rectangular regions and the like are generated. The binary image data 103 from which a rectangular region is cut out will then include an empty portion, to which data of 0 (without image) is assigned. The cut-out rectangular region data 102 is transferred to the multi-value generation device 3.

The multi-value generation device 3 generates multi-value image data from the cut out rectangular region data 102 and outputs it to the multi-value encoder 4. The method of generating the multi-value image data will be described later. The multi-value encoder 4 carries out JPEG encoding which is a non-reversible block unit by block unit compression utilizing an orthogonal conversion, and outputs multi-value code data 106. The JPEF encoding system is already known and thus a description thereof will be omitted. The binary encoder 5 encodes the image data from which the cut-out rectangular region data 102 is eliminated with high efficiency using the JBIG encoding system and outputs binary code data 107. The RAE 6 encodes the number of rectangular regions, the corner offset value and the rectangular size and outputs code data 108.

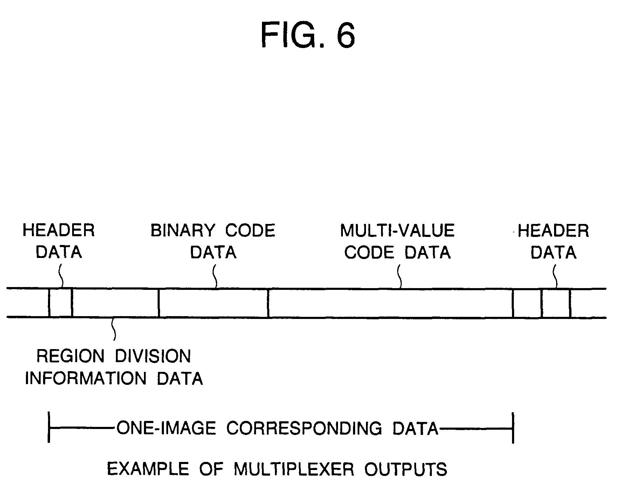

The multiplexer 7 has therein a code buffer (not shown) and holds code data 106 to 108. Upon finishing of the encoding of an entire screen of data, multiplexed code data 109 composed of the encoded data arranged in an appropriate order is output to a transmission path. In this case, the multiplexer 7 adds header data including the data size or the like and a marker indicating the edges of the three types of data. An example of the code output 109 is shown in Fig. 6.

In Fig. 6, the code output includes header data including size information for data corresponding to one image or the like. This is followed by the region division information data which is required to enable superimposition of the multi-value code data 106 and the binary code data 108 at the decoding side. Then the binary code data which, as illustrated, forms only a small proportion of the overall amount of encoded image data is output. Outputting the binary code data before the multi-value code data enables, if the binary image output unit 14 at the code data reception side is a monitor or the like, an outline of an image to be quickly determined. The binary code data is followed by the multi-value code data which forms a relatively large proportion of the overall amount of encoded image data. As shown in Fig. 6, a marker indicating the edge of data is inserted between different types of data. Here, the data are output in the order as shown in Fig. 6 treating the image as one block. However, it is possible to output data in block units or with a different order from that shown in Fig. 6. Also other data may be included in the output data.

Next, the operation of the decoder shown in the lower portion of Fig. 1 will be described. Code data 110 is input to the demultiplexer 8 from the transmission path. The demultiplexer 8 divides the data stream in accordance with the header information or the like added by the multiplexer 7. The multi-value code data 111 is input to the multi-value decoder 9, the binary code data 112 is input to the binary decoder 11 and region division information data 113 is input to the RAD.

The binary decoder 9 carries out JPEG decoding on the multi-value code data 111 and outputs multi-value image data 114. The binarizer 10 re-binarizes the multi-value image data 114 using a pseudo halftone process (ED method or the like is utilized) to output pseudo halftone image data 115. The binary decoder 11 carries out JBIG decoding on the binary code data 112 to output binary image data 116. The RAD 12 decodes the coordinate to which the cut-out rectangular region is to be applied, the size of theregion and numbers of rectangular regions to output region division information 117, The superimposer 13 superimposes the pseudo halftone image data 115 on the binary image data 116 in accordance with the region division information 117 to synthesize a single binary image 118 which is output to the binary image output unit 14. The binary image output unit 14 may be an image output device such as an electrophotographic system, a recording system using a recording head which discharges ink droplets by utilizing heat energy to cause film boiling (the so-called bubble jet system), or another type of image output device such as a printer, a monitor and the like.

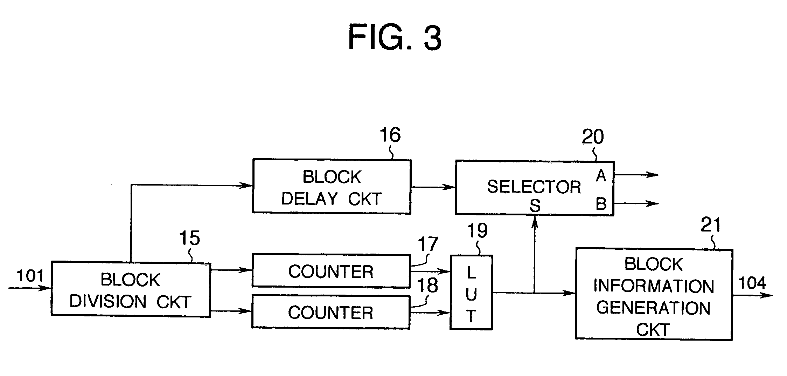

An example of the region divider 2 is shown in Fig. 3. The binary image data 101 input from the binary image input unit 1 is divided into blocks having a block unit of n × n pixels in a block division circuit 15 to be output to a block delay circuit 16, counters 17 and 18 in block units. The counter 17 outputs the number of black pixels in a block, and the counter 18 counts the number of changes between white and black pixels in each vertical/horizontal line in a block and outputs the sum thereof. The number of counters and the combination of parameters counted need not be limited to the above-mentioned example. Any method that can discriminate a pseudo halftone image portion from another portion may be used.

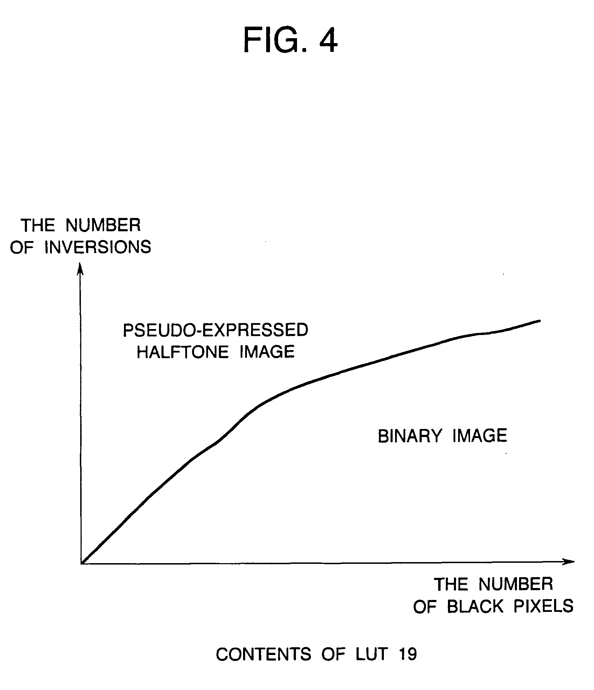

A look up table 19 (referred to as a LUT hereinafter) receives the outputs of the counters 17 and 18 and outputs a signal which is used to discriminate a pseudo halftone image portion from another portion on the basis of the graph shown in Fig. 4. A selector 20 is controlled by the output of the LUT 19 to switch the destination of the block unit inforamtion from the block delay circuit 16 to side A when it is determined (using the LUT 19) that a pseudo halftone image is being processed, and to side B when it is determined (using the LUT 19) that a character image is being processed. A block information generation circuit 21 generates and outputs the region division information data 104, based on the informatino switched at this time.

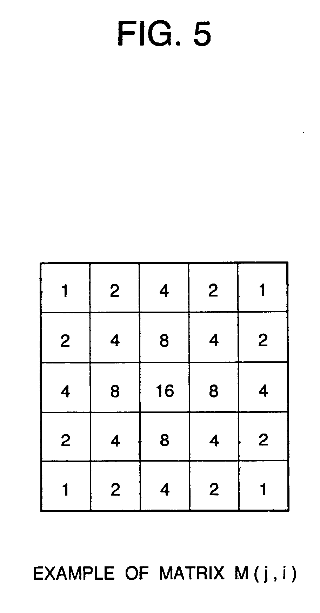

The operation of the multi-value generation device 3 will now be described with reference to Fig. 5. Every pixel of the pseudo halftone image portion (which is cut out as a rectangular region) is considered sequentially from its left upper corner to its right lower corner. The 5 x 5 pixels around the objective pixel (target pixel) are cut out. A pixel at coordinates j,i is then assumed to have a value P (j, i). By utilizing this value P (j, i) and the matrix M (j, i) shown in Fig. 5, the multi-value v for the objective pixel is defined by the following equation.

$$v = \sum_j \sum_i M(j, i) \times P(j, i) \times 255/100$$

   when P (j, i) = 0 ... white pixel
   when P (j, i) = 1 ... black pixel

In this manner, the multi-value data is generated from the binary data in the rectangular region. With the foregoing description, the first embodiment is concluded. According to the present embodiment, while maintaining the same size, the multi-value data is generated from the binary image which is cut out as the rectangular shape. Therefore, simply, the data becomes eight times as large as before.

If it is taken into the consideration that the data is compressed to about 0.6 bit/pixel when original data, that is, 1 bit/pixel of the pseudo halftone image data, is encoded as it is using the JBIG system, at least a compression ratio equal to or larger than 1:20 is required in case of compressing the foregoing eight-timesenlarged data using the JPEG system. This compression ratio can be easily realized by setting the quantizing parameters or the like in the JPEG compression system. Therefore, according to the first embodiment, a binary image which includes a pseudo halftone image can be easily and effectively compressed as compared with the conventional system.

[Second Embodiment]

The overall structure of the second embodiment of the present invention is same as that of the first embodiment. However, the internal operation of the multi-value encoder 4 and the multi-value decoder shown in Fig. 1 are different in the second embodiment.

In the first embodiment, multi-value data generated by themulti-value generation device 3 is directly encoded in the multi-value encoder 4. In the second embodiment, multi-value image data is DPCM encoded after sub-sampling at a resolution of 1/4 every vertical/horizontal line.

It is known that when a multi-value image having a different resolution whose value is multiplied by about 2 to 4 is binarized by an ED method, the quality of the output binary image does not differ greatly. (However, a simple enlargement is conducted before binarization to have the same resolution.) The present embodiment utilizes the above-mentioned fact. The data which is increased to provide 8 bits/pixel data because of the multi-value transformation, is compressed to data whose capacity decreased to 1/16 by the sub-sampling of 1/4 every vertical/horizontal line. By conducting lossless DPCM encoding on data processed as above, a compression ratio of about 1/2 can be expected. Finally, the data can be compressed to about the capacity of 0.25 bit/pixel or so.

Of course, the thus obtained compression ratio becomes more effective as compared with the prior JBIG, MR system or the like.

In the second embodiment, the multi-value decoder 9 shown in Fig. 1 is a DPCM decoder, and the binarizer 10 generates the DPCM decoded pixel four times repeatedly for each vertrical/horizontal line before binarization to interpolate the sub-sampled data.

[Third Embodiment]

Similarly to the second embodiment, the third embodiment differs from the first embodiment with respect to the internal operation of themulti-value encoder 4 and the multi-value decoder 9. In the third embodiment, the JPEG encoding system is again utilized in in the multi-value encoder 4, however, the third embodiment differs from the second embodiment is that a multi-value image is sub-sampled to 1/2 every vertical/horizontal line before conducting the JPEG encoding. According to this process, the data which was increased by the multi-value conversion from 1 bit/pixel to 8 bits/pixel is compressed to 2 bits/pixel.

On the other hand, by adjusting the compression ratio of the JPEG encoding only to 1/4, it is possible to exceed the compression ratio depending on the prior system. In this case, it can be expected that multi-value image data which is JPEG decoded in the multi-value decoder 9 becomes high quality image data.

By adjusting the compression ratio of the JPEG encoding to about 1/10 depending on the sub-sampling of 1/4 every vertical/horizontal line, a compression ratio almost similar to that of an ordinary character image can be obtained.

In the first to the third embodiments of the present invention, the multi-value encoding system of the multi-value encoder 4 is not limited to JPEG encoding, another multi-value encoding such as a vector quantization, an orthogonal conversion encoding or the like can be used. Also, the binary encoding in a binary encoding 5 is not limited to JBIG encoding, another binary encoding system such as MH, MR, MMR or the like can be used.

Further, in the first to the third embodiments of the present invention,the entire portion(other than the pseudo expressed halftone image portion)which is divided into regions in the region divider 2 is binary encoded in the binary encoder 5. However, without limiting to such method, it is considered thatthe part other than the pseudo expressed halftone image portion may be binary encoded by the binary encoder 5, and another encoding system (for example, conducting the encoding depending on the recognition of characters) may be utilized on the expected binary image portion.

[Example of another modification]

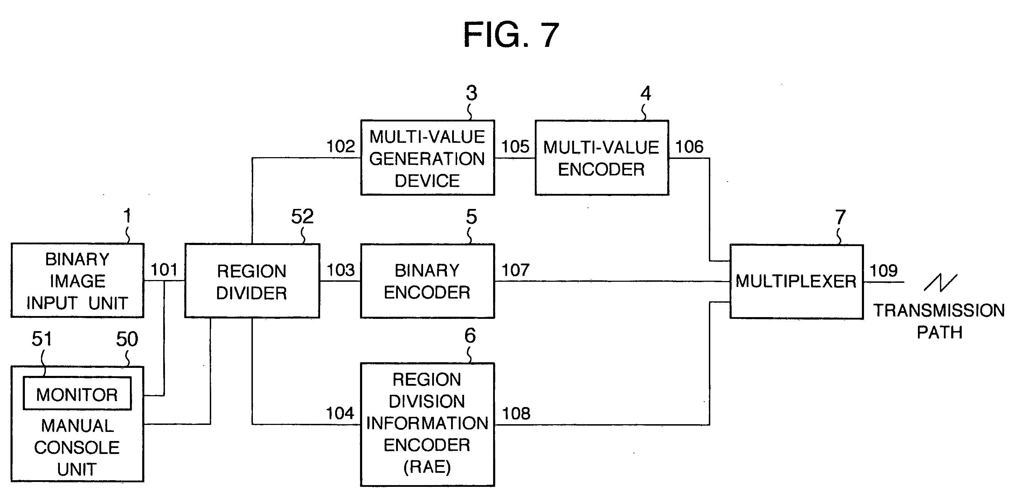

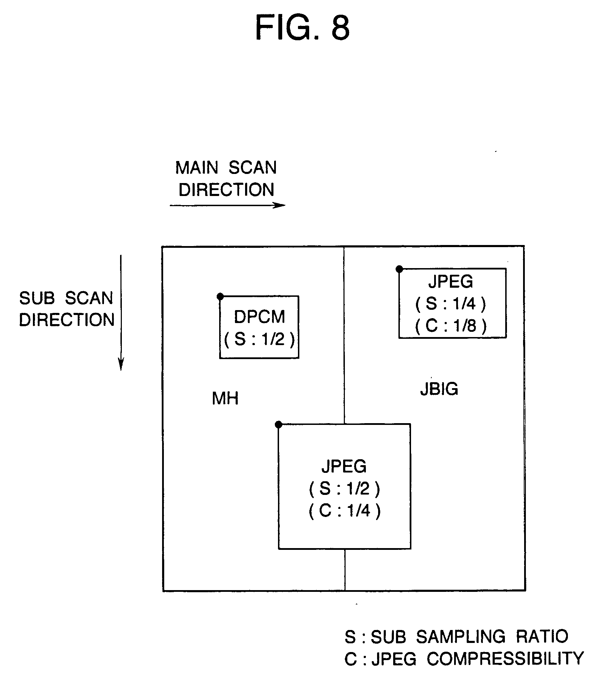

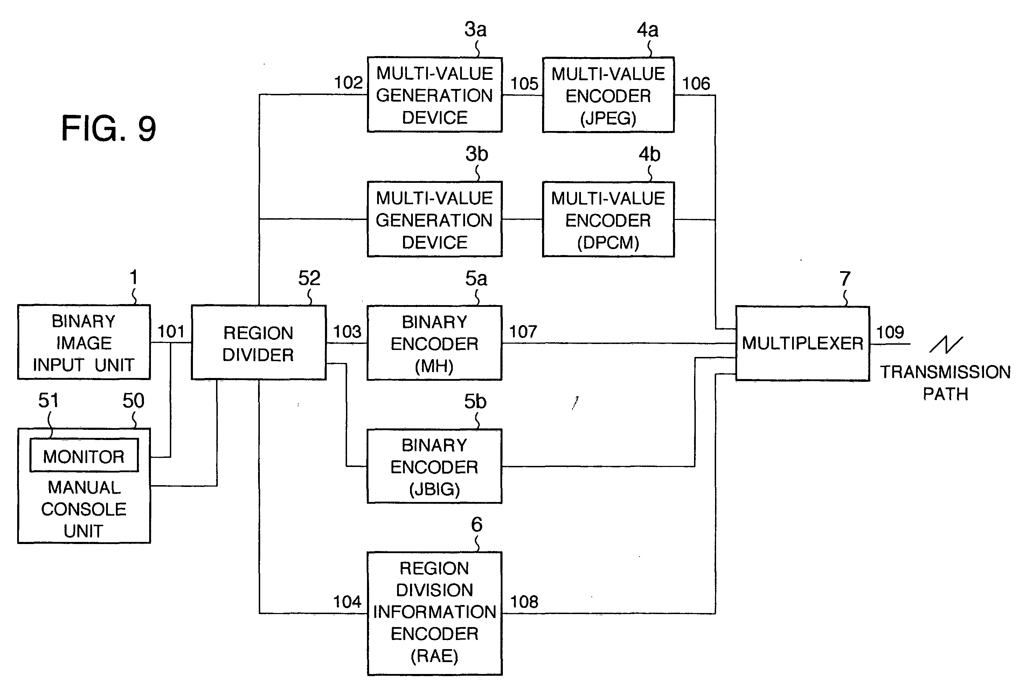

A modified example of the first to the third embodiments of the present invention is shown in Fig. 7. In Fig. 7, differs from the block diagram shown in Fig. 1 by the provision of a manual console unit 50. The manual console unit 50 displays binary image data input from a binary image input unit 1 by using a monitor 51. According to this displayed image, a region divider is controlled by manual operation. That is, instead of an automatic region division operation conducted by a region divider 2 shown in Fig. 1, the region division operation is controlled by the manual operation. A region divider 52 distributes the binary image data input from the binary image input unit 1 into the data 102 and 103 based on a control signal from the manual console 50 and outputs the encoding parameter described later. Thereafter, the same process as that of the first to the third embodiments is executed. The manual console unit 50 can designate not only a pseudo halftone image region and another binary image region but also the encoding parameters such as the encoding method (DPCM, JPEG, MR or the like), the foregoing sub-sampling ratio (1/2 or 1/4 etc), the JPEG compression ratio or the like for each designated region independently. According to the present invention, the encoding parameter can also be assigned to each region as shown in Fig. 8. An example of an encoder for use in such case is shown in Fig. 9.

In Fig. 9, differs from Fig. 7 in that plural multi-value generation units 3, multi-value encoders 4 and binary encoders 5 are provided. The other structure of Fig. 9 is same as that of Fig. 7. With the above, the description of an example of another modification is concluded. When the encoding is conducted by a computer, the algorithm of encoding utilized in the above each embodiment may be stored in various storing mediums such as the floppy disk or the like as the program to be read out by a computer for encoding the data.

As described above, according to the present invention, a binary image including a pseudo-expressed halftone image for which high compression ratio can be barely obtained conventionally can be data compressed effectively.

The present invention can be modified in various ways, within the scope of following claims.

**Claims**

**1.** An image processing apparatus, comprising:

> input means (1) for receiving input binary image data representing a plurality of pixels each of which has one or the other of only two possible states;
> region division means (2) for separating the binary image data into first image data and second image data;
> first encoding means (3, 4) for encoding the first image data; and

second encoding means (5) for encoding the second image data,

**characterized in that**

the region division means (2) comprises
block dividing means (15) for dividing the binary image data into a plurality of blocks of pixel data,
determining means (17-19) for determining whether a block is pseudo halftone image data that has been generated from multi-value image data in accordance with the number of pixels having one of said states and the number of changes between the first and second states in a block, and
selector means (20) for supplying a block of image data to the first encoding means (3, 4) as first image data when that block of data is determined by the determining means (17-19) to be pseudo halftone image data and for supplying a block of image data to the second encoding means (5) as second image data when that block of data is determined by the determining means (17-19) not to be pseudo halftone image data;

**in that** the first encoding means (3, 4) comprises multi-value image data generating means (3) for generating multi-value image data for a pixel from the binary image data in accordance with

$$\Sigma\Sigma P(j,i)*M(j,i)$$

where P(j,i) represents the value of a pixel at coordinates j, i in a matrix of pixels centred on that pixel and is 0 for one of the first and second states and 1 for the other of the first and second states and M(j,i) is a value at coordinates j, i in a matrix of values, and a first encoder (4) for encoding multi-value data generated by the multi-value image data generating means (3) in accordance with a multi-value encoding system; and
**in that** the second encoding means (5) comprises a second encoder for encoding the second image data as binary value image data in accordance with a binary encoding system.

2. An apparatus according to claim 1, wherein said first encoding means (3, 4) is arranged to perform non-reversible encoding and said second encoding means (5) is arranged to perform reversible encoding.

3. An apparatus according to claim 1, wherein said first encoding means (3, 4) is arranged to perform non-reversible encoding of the first image block by block and said second encoding means (5) is arranged to perform a reversible encoding of the second image line by line.

4. An apparatus according to claim 1, wherein the first encoder (4) is arranged to use as the multi-value encoding system the JPEG, Vector quantization or orthogonal encoding system.

5. An apparatus according to claim 1 or 4, wherein the second encoder (5) is arranged to use as the binary encoding system the JBIG or MH or MR or MMR encoding system.

6. An apparatus according to any one of the preceding claims, further comprising manual operation means (50) for manually controlling said region division means (52).

7. An apparatus according to any one of the preceding claims, further comprising display means (51) for displaying a binary image input by said input means (1).

8. A decoding apparatus for decoding an image encoded using an apparatus in accordance with any one of the preceding claims, **characterised by** comprising:

reception means (110) for receiving encoded multi-value image data representing pixels each of which had any one of more than two different possible states and encoded binary image data representing a plurality of pixels each of which had one or the other of only two possible states;
binarization means (9,10) for decoding the received multi-value image data and for generating from the decoded multi-value image data a pseudo halftone image in which a multi-value density image formed of a plurality of pixels is represented as binary image data;
decoding means (11) for decoding the received encoded binary image data to generate a binary image; and
superimposing means (13) for superimposing the binarized pseudo halftone image on the decoded binary image.

**9.** An apparatus according to any one of claims 1 to 7, further comprising:

reception means (110) for receiving encoded multi-value image data and encoded binary image data;
binarization means (9,10) for decoding the received multi-value image data and for generating from the decoded multi-value image a pseudo halftone image in which a multi-value density image formed of a plurality of pixels is represented as binary image data;
decoding means (11) for decoding the received encoded binary image data to generate a binary image; and
superimposing means (13) for superimposing the binarized pseudo halftone image on the decoded binary image.

**10.** An apparatus according to claim 8 or 9, wherein said superimposing means (13) is arranged to carry out the superimposition in accordance with region information received by said reception means (110).

**11.** An apparatus according to claim 8, 9 or 10, comprising output means in the form of a printer arranged to print using a print head which is arranged to use heat energy to discharge ink droplets by film boiling.

**12.** A method of image processing in an image processing apparatus, the method comprising:

an input step of receiving input binary image data representing a plurality of pixels each of which has one or the other of only two possible states;
a region division step of separating the binary image data into first image data and second image data;
a first encoding step of encoding the first image data; and
a second encoding step of encoding the second image data,

**characterized in that**
the region division step comprises

dividing the binary image data into a plurality of blocks of pixel data,
determining whether a block is pseudo halftone image data that has been generated from multi-value image data in accordance with the number of pixels having one of said states and the number of changes between the first and second states in a block, and
supplying a block of image data as first image data for encoding in the first encoding step when that block of data is determined to be pseudo halftone image data and supplying a block of image data as second image data for encoding in said second encoding step when that block of data is determined not to be pseudo halftone image data;

**in that** the first encoding step comprises generating multi-value image data from the binary image data in accordance with

$$\Sigma\Sigma P(j,i)*M(j,i)$$

where P(j,i) represents the value of a pixel at coordinates j,i in a matrix of pixels centred on that pixel and is 0 for one of the first and second states and 1 for the other of the first and second states and M(j, i) is a value at coordinates j, i in a matrix of values, and then encoding the generated multi-value image data in accordance with a multi-value encoding system; and
**in that** the second encoding step comprises encoding the second image data as two-value image data in accordance with a binary encoding system.

**13.** A method according to claim 12, wherein said first encoding step performs non-reversible encoding and said second encoding step performs reversible encoding.

**14.** A method according to claim 12, wherein said first encoding step performs non-reversible encoding of an image block by block and said second encoding step performs a reversible encoding of the image line by line.

**15.** A method according to claim 12, which comprises using as the multi-value encoding system the JPEG or Vector quantization or orthogonal encoding system.

16. A method according to claim 12 or 15, which comprises using as the binary encoding system the JBIG or MH or MR or MMR encoding system.

17. A method according to any one of claims 12 to 16, further comprising manually controlling said region division step.

18. A method according to any one of claims 12 to 17, further comprising displaying an input binary image on display means (51).

19. A method for decoding an image encoded using a method in accordance with any one of claims 12 to 18, comprising:

a reception step of receiving encoded multi-value image data and encoded binary image data;
a binarization step of decoding the received multi-value image data and generating from the decoded multi-value image a pseudo halftone image in which a multi-value density image formed of a plurality of pixels is represented as binary image data;
a decoding step of decoding the received encoded binary image data to generate a binary image; and
superimposing step of superimposing the binarized pseudo halftone image on the decoded binary image.

20. A method according to any one of claims 12 to 18, further comprising:

a reception step of receiving encoded multi-value image data and encoded binary image data;
a binarization step of decoding the received multi-value image data and generating from the decoded multi-value image a pseudo halftone image in which a multi-value density image formed of a plurality of pixels is represented as binary image data;
a decoding step of decoding the received encoded binary image data to generate a binary image; and
a superimposing step of superimposing the binarized pseudo halftone image on the decoded binary image.

21. A method according to claim 19 or 20, wherein said superimposing step carries out said superimposition in accordance with region information received in said reception step.

22. A method according to claim 19, 20 or 21, further comprising printing the superimposed image using a printer having a print head which ejects ink by using heat to cause film boiling.

23. A computer storage medium carrying computer implementable instructions for causing a computer to carry out a method in accordance with any one of claims 12 to 14 and 19 to 21.


**Patentansprüche**

1. Bildverarbeitungsvorrichtung mit
   einer Eingabeeinrichtung (1), um binäre Eingabebilddaten zu erfassen, die eine Vielzahl von Bildpunkten darstellen, von denen jeder den einen oder den anderen von nur zwei möglichen Zuständen einnimmt;
   einer Bereichsaufteilungseinrichtung (2) zur Trennung der binären Bilddaten in erste Bilddaten und zweite Bilddaten;
   einer ersten Codiereinrichtung (3, 4) zur Codierung der ersten Bilddaten und
   einer zweiten Codiereinrichtung (5) zur Codierung der zweiten Bilddaten,
   **dadurch gekennzeichnet,**
   **dass** die Bereichsaufteilungseinrichtung (2)
   eine Blockzerlegungseinrichtung (15) zur Zerlegung der binären Bilddaten in eine Vielzahl von Blöcken mit Bildpunktdaten,
   eine Bestimmungseinrichtung (17-19) zum Bestimmen, ob ein Block Pseudo-Halbton-Bilddaten darstellt, die aus vielwertigen Bilddaten gemäß der Anzahl der einen der beiden Zustände einnehmenden Bildpunkte und der Anzahl der Wechsel zwischen dem ersten und dem zweiten Zustand in einem Block erzeugt wurden, und
   eine Auswahleinrichtung (20) aufweist, um einen Block von Bilddaten an die erste Codiereinrichtung (3, 4) als erste Bilddaten zu leiten, wenn für diesen Datenblock von der Bestimmungseinrichtung (17-19) bestimmt wurde, dass es sich um Pseudo-Halbton-Bilddaten handelt, und um einen Block von Bilddaten zu der zweiten Codiereinrichtung (5) als zweite Bilddaten zu leiten, wenn für diesen Datenblock von der Bestimmungseinrichtung (17-19) bestimmt wurde, dass es sich nicht um Pseudo-Halbton-Bilddaten handelt;

**dass** die erste Codiereinrichtung (3, 4) zum Erzeugen vielwertiger Bilddaten für einen Bildpunkt aus den binären Bilddaten gemäß der Formel

$$\Sigma\Sigma\ P(j,i)*M(j,i)$$

eine Vielwertbilddaten-Erzeugungseinrichtung (3) aufweist,

wobei P(j,i) den Wert eines Bildpunkts an den Koordinaten j, i in einer Matrix von Bildpunkten darstellt, in deren Mittelpunkt dieser Bildpunkt steht, und den Wert 0 für einen der beiden Zustände und den Wert 1 für den anderen der beiden Zustände hat und M(j,i) den Wert der Koordinaten j, i in einer Matrix von Werten darstellt,

und einen ersten Codierer (4) zur Codierung vielwertiger Daten, die durch die Vielwertbilddaten-Erzeugungseinrichtung (3) gemäß einem System zum Codieren vielwertiger Daten erzeugt wurden; und

**dass** die zweite Codiereinrichtung (5) einen zweiten Codierer umfasst, damit die zweiten Bilddaten als Binärwert-Bilddaten gemäß einem binären Codiersystem codiert werden.

2.  Vorrichtung nach Anspruch 1, wobei die erste Codiereinrichtung (3, 4) so gestaltet ist, dass eine irreversible Codierung durchgeführt wird , und die zweite Codiereinrichtung (5) so gestaltet ist, dass eine reversible Codierung durchgeführt wird.

3.  Vorrichtung nach Anspruch 1, wobei die erste Codiereinrichtung (3, 4) so ausgelegt ist, dass Block für Block eine irreversible Codierung des ersten Bilds durchgeführt wird, und die zweite Codiereinrichtung (5) so gestaltet ist, dass Zeile für Zeile eine reversible Codierung des zweiten Bilds ausgeführt wird.

4.  Vorrichtung nach Anspruch 1, wobei der erste Codierer (4) so ausgelegt ist, dass als das vielwertige Codiersystem das JPEG-, das Vektorquantifizierungs- oder das Orthogonal-Codiersystem eingesetzt wird.

5.  Vorrichtung nach Anspruch 1 oder 4, wobei der zweite Codierer (5) so gestaltet ist, dass als das binäre Codiersystem das JBIG-, das MH-, das MR- oder das MMR-Codiersystem eingesetzt wird.

6.  Vorrichtung nach einem der vorhergehenden Ansprüche, mit einer Handbedieneinrichtung zur manuellen Steuerung der Bereichsaufteilungseinrichtung (52).

7.  Vorrichtung nach einem der vorhergehenden Ansprüche, mit einer Anzeigeeinrichtung (51) zum Anzeigen von durch die Eingabeeinrichtung (1) eingegebenen binären Bildeingangswerten.

8.  Decodiervorrichtung zum Decodieren eines Bildes, das unter Verwendung einer Vorrichtung gemäß einem der vorstehenden Ansprüche codiert ist, **gekennzeichnet durch:**

    eine Empfangseinrichtung (110) zum Empfang codierter vielwertiger Bilddaten, die Bildpunkte darstellen, von denen jeder einzelne einen von mehr als zwei unterschiedlichen möglichen Zuständen einnimmt, und codierter binärer Bilddaten, die eine Vielzahl von Bildpunkten darstellen, von denen jeder den einen oder den anderen von nur zwei möglichen Zuständen einnimmt;
    eine Binärwert-Umwandlungseinrichtung (9, 10) zum Decodieren der empfangenen vielwertigen Bilddaten und zum Erzeugen eines Pseudo-Halbtonbilds aus den decodierten vielwertigen Bilddaten, bei dem ein aus einer Vielzahl von Bildpunkten gebildetes vielwertiges Schwärzungsbild als binäre Bilddaten dargestellt wird;
    eine Decodiereinrichtung (11) zum Decodieren der empfangenen codierten Bilddaten, um ein Binärbild zu erzeugen; und
    eine Überlagerungseinrichtung (13), um das in Binärwerte umgewandelte Pseudo-Halbtonbild dem decodierten binären Bild zu überlagern.

9.  Vorrichtung nach einem der Ansprüche 1 bis 7, mit
    einer Empfangseinrichtung (110) zum Empfangen codierter vielwertiger Bilddaten und codierter binärer Bilddaten;
    einer Binärwert-Umwandlungseinrichtung (9, 10), um die empfangenen vielwertigen Bilddaten zu decodieren und um aus dem decodierten vielwertigen Bild ein Pseudo-Halbtonbild zu erzeugen, bei dem ein aus einer Vielzahl von Bildpunkten gebildetes vielwertiges Schwärzungsbild als binäre Bilddaten dargestellt wird;
    einer Decodiereinrichtung (11) zum Decodieren der empfangenen codierten binären Bilddaten, um ein binäres Bild zu erzeugen, und

einer Überlagerungseinrichtung (13), um das binärgewandelte Pseudo-Halbtonbild dem decodierten binären Bild zu überlagern.

10. Vorrichtung nach Anspruch 8 oder 9, wobei die Überlagerungseinrichtung (13) so ausgelegt ist, dass die Überlagerung gemäß der von der Empfangseinrichtung (110) empfangenen Bereichsinformation durchgeführt wird.

11. Vorrichtung gemäß Anspruch 8, 9 oder 10, mit einem Drucker als Ausgabeeinrichtung, der mit einem Wärmeenergie zur Entladung von Tintentröpfchen durch Filmsieden verwendenden Druckkopfs druckt.

12. Verfahren zur Bildverarbeitung in einer Bildverarbeitungsvorrichtung mit
einem Eingabeschritt, um binäre Eingabebilddaten zu erfassen, die eine Vielzahl von Bildpunkten darstellen, von denen jeder den einen oder den anderen von nur zwei möglichen Zuständen einnimmt;
einem Bereichsaufteilungsschritt, in dem die binären Bilddaten in erste Bilddaten und zweite Bilddaten aufgeteilt werden;
einem ersten Codierschritt, in dem die ersten Bilddaten codiert werden; und
einem zweiten Codierschritt, in dem die zweiten Bilddaten codiert werden;
**dadurch gekennzeichnet,**
**dass** der Bereichsaufteilungsschritt die weiteren Schritte umfaßt:

Aufteilen der binären Bilddaten in eine Vielzahl von Blöcken mit Bildpunktdaten,
Bestimmen, ob ein Block Pseudo-Halbton-Bilddaten darstellt, die aus vielwertigen Bilddaten gemäß der Anzahl der einen der Zustände aufweisenden Bildpunkten und der Anzahl der Wechsel in einem Block zwischen dem ersten und dem zweiten Zustand erzeugt wurden, und
Bereitstellen eines Blocks von Bilddaten als erste Bilddaten zum Codieren in dem ersten Codierschritt, wenn für diesen Datenblock bestimmt wurde, dass es sich um Pseudo-Halbton-Bilddaten handelt, und
Bereitstellen eines Blocks von Bilddaten als zweite Bilddaten zum Codieren in dem zweiten Codierschritt, wenn für diesen Datenblock bestimmt wurde, dass es sich nicht um Pseudo-Halbton-Bilddaten handelt,

**dass** der erste Codierschritt die Schritte aufweist:

Erzeugen von vielwertigen Bilddaten aus den binären Bilddaten gemäß

$$\Sigma\Sigma\ P(j,i)*M(j,i),$$

wobei P(j,i) den Wert eines Bildpunkts an den Koordinaten j, i in einer Matrix von Bildpunkten darstellt, in deren Mittelpunkt dieser Bildpunkt steht, und den Wert 0 für einen der beiden Zustände und den Wert 1 für den anderen der beiden Zustände hat und M(j,i) ein Wert an den Koordinaten j, i in einer Matrix von Werten ist, und
Codieren der erzeugten vielwertigen Bilddaten gemäß einem vielwertigen Codiersystem; und
**dass** der zweite Codierschritt das Codieren der zweiten Bilddaten als zweiwertige Bilddaten gemäß einem binären Codiersystem umfasst.

13. Verfahren nach Anspruch 12, wobei der erste Codierschritt eine irreversible Codierung ausführt und der zweite Codierschritt eine reversible Codierung ausführt.

14. Verfahren nach Anspruch 12, wobei der erste Codierschritt Block für Block eine irreversible Codierung eines Bildes ausführt und der zweite Codierschritt Zeile für Zeile eine reversible Codierung des Bildes durchführt.

15. Verfahren nach Anspruch 12, das als vielwertiges Codiersystem das JPEG-, das Vektorquantifizierungs- oder das Orthogonal-Codiersystem umfasst.

16. Verfahren nach Anspruch 12 oder 15, das als binäres Codiersystem das JBIG-, das MH-, MR- oder MMR-Codiersystem umfasst.

17. Verfahren nach einem der Ansprüche 12 bis 16, mit einer manuellen Steuerung des Bereichsaufteilungschritts.

18. Verfahren nach einem der Ansprüche 12 bis 17, mit der Anzeige eines binären Eingabebildes auf einer Anzeigeeinrichtung (51).

**19.** Verfahren zum Decodieren eines Bildes, das unter Verwendung eines Verfahrens nach einem der Ansprüche 12 bis 18 codiert ist, mit

einem Empfangsschritt, in dem codierte vielwertige Bilddaten und codierte binäre Bilddaten empfangen werden;

einem Umwandlungsschritt zur Umwandlung in Binärwerte, bei dem die empfangenen vielwertigen Bilddaten decodiert werden und aus dem decodierten vielwertigen Bild ein Pseudo-Halbton-Bild erzeugt wird, in dem ein aus einer Vielzahl von Bildpunkten gebildetes vielwertiges Schwärzungsbild als binäre Bilddaten dargestellt ist;

einem Decodierschritt zum Decodieren der empfangenen codierten binären Bilddaten, um ein binäres Bild zu erzeugen; und

einem Überlagerungsschritt, in dem das in Binärwerte gewandelte Pseudo-Halbton-Bild dem decodierten Binärbild überlagert wird.

**20.** Verfahren nach einem der Ansprüche 12 bis 18, mit

einem Empfangsschritt, in dem codierte vielwertige Bilddaten und codierte binäre Bilddaten empfangen werden;

einem Umwandlungsschritt zur Umwandlung in Binärwerte, in dem die empfangenen, vielwertigen Bilddaten decodiert werden und aus den decodierten vielwertigen Bild ein Pseudo-Halbton-Bild erzeugt wird, bei dem ein aus einer Vielzahl von Bildpunkten gebildetes vielwertiges Schwärzungsbild als binäre Bilddaten dargestellt ist;

einem Decodierschritt, in dem die empfangenen codierten binären Bilddaten decodiert werden, so dass ein binäres Bild erzeugt wird; und

einem Überlagerungsschritt, in dem das in Binärwerte gewandelte Pseudo-Halbton-Bild dem decodierten binären Bild überlagert wird.

**21.** Verfahren nach Anspruch 19 oder 20, wobei der Überlagerungsschritt die Überlagerung gemäß der in dem Empfangsschritt empfangenen Bereichsinformation ausführt.

**22.** Verfahren nach Anspruch 19, 20 oder 21, mit dem Schritt des Druckens des überlagerten Bildes unter Verwendung eines Druckers, der einen Druckkopf aufweist, der Tinte unter Verwendung von Filmsieden verursachender Hitzeentwicklung ausstößt.

**23.** Computer-Speicher-Medium mit auf einem Computer ausführbaren Befehlen, um diesen zu veranlassen, ein Verfahren gemäß einem der Ansprüche 12 bis 14 und 19 bis 21 auszuführen.

**Revendications**

**1.** Appareil de traitement d'images, comportant:

un moyen d'entrée (1) destiné à recevoir des données d'image binaires d'entrée représentant une pluralité de pixels ayant chacun l'un ou l'autre de seulement deux états possibles;
un moyen (2) de division en régions destiné à séparer les données d'image binaires en premières données d'image et secondes données d'image;
un premier moyen de codage (3, 4) destiné à coder les premières données d'image; et
un second moyen de codage (5) destiné à coder les secondes données d'image,

**caractérisé en ce que**
le moyen (2) de division en régions comporte

un moyen (15) de division par blocs destiné à diviser les données d'image binaires en une pluralité de blocs de données de pixels,
un moyen de détermination (17-19) destiné à déterminer si un bloc est constitué de données d'image en pseudo demi-teintes qui ont été générées à partir de données d'image de valeurs multiples en fonction du nombre de pixels ayant l'un desdits états et du nombre de changements entre les premier et second états dans un bloc, et
un moyen à sélecteur (20) destiné à fournir un bloc de données d'image au premier moyen de codage (3, 4) en tant que premières données d'image lorsque ce bloc de données est déterminé par le moyen (17-19) comme étant constitué de données d'image en pseudo demi-teintes, et à fournir un bloc de données d'image au second moyen de codage (5) en tant que secondes données d'image lorsque ce bloc de données est déterminé par le moyen de détermination (17-19) comme n'étant pas constitué de données d'image en pseudo demi-teintes;

**en ce que** le premier moyen de codage (3, 4) comporte un moyen (3) de génération de données d'image de valeurs multiples destiné à générer des données d'image de valeurs multiples pour un pixel à partir des données d'image binaires conformément à

$$\Sigma\Sigma P(j,i)*M(j,i)$$

où P(j,i) représente la valeur d'un pixel en coordonnées j, i dans une matrice de pixels centrée sur ce pixel et est 0 pour l'un des premier et second états et un pour l'autre des premier et second états et M(j,i) est une valeur en coordonnées j, i dans une matrice de valeurs, et un premier codeur (4) destiné à coder des données de valeurs multiples générées par le moyen (3) de génération de données d'image de valeurs multiples conformément à un système de codage à valeurs multiples; et

**en ce que** le second moyen de codage (5) comporte un second codeur destiné à coder les secondes données d'image en tant que données d'image de valeurs binaires conformément à un système de codage binaire.

2. Appareil selon la revendication 1, dans lequel ledit premier moyen de codage (3, 4) est agencé de façon à effectuer un codage non réversible et ledit second moyen de codage (5) est agencé de façon à effectuer un codage réversible.

3. Appareil selon la revendication 1, dans lequel ledit premier moyen de codage (3, 4) est agencé de façon à effectuer un codage non réversible de la première image bloc par bloc et ledit second moyen de codage (5) est agencé de façon à effectuer un codage réversible de la seconde image ligne par ligne.

4. Appareil selon la revendication 1, dans lequel le premier codeur (4) est agencé de façon à utiliser en tant que système de codage à valeurs multiples le système de codage JPEG, par quantification vectorielle ou orthogonal.

5. Appareil selon la revendication 1 ou 4, dans lequel le second codeur (5) est agencé de façon à utiliser en tant que système de codage binaire, le système de codage JBIG ou MH ou MR ou MMR.

6. Appareil selon l'une quelconque des revendications précédentes, comportant en outre un moyen d'actionnement manuel (50) pour commander manuellement ledit moyen (52) de division par régions.

7. Appareil selon l'une quelconque des revendications précédentes, comportant en outre un moyen d'affichage (51) destiné à afficher une image binaire introduite par ledit moyen d'entrée (1).

8. Appareil de décodage destiné à décoder une image codée en utilisant un appareil selon l'une quelconque des revendications précédentes, **caractérisé en ce qu'**il comporte:

un moyen de réception (110) destiné à recevoir des données d'image de valeurs multiples, codées, représentant des pixels ayant eu chacun l'un quelconque de plus de deux états possibles différents et des données d'image binaires codées représentant une pluralité de pixels ayant eu chacun l'un ou l'autre de seulement deux états possibles;
un moyen de binarisation (9, 10) destiné à décoder les données d'image à valeurs multiples reçues et à générer à partir des données d'image à valeurs multiples décodées, une image en pseudo demi-teintes dans laquelle une image de densité à valeurs multiples formée d'une pluralité de pixels est représentée sous la forme de données d'image binaires;
un moyen de décodage (11) destiné à décoder les données d'image binaires codées reçues pour générer une image binaire; et
un moyen de superposition (13) destiné à superposer l'image en pseudo demi-teintes, binarisée, sur l'image binaire décodée.

9. Appareil selon l'une quelconque des revendications 1 à 7, comportant en outre:

un moyen de réception (110) destiné à recevoir des données d'image de valeurs multiples, codées, et des données d'image binaires codées;

un moyen de binarisation (9, 10) destiné à décoder les données d'image à valeurs multiples, reçues, et à générer à partir de l'image à valeurs multiples décodée une image en pseudo demi-teintes dans laquelle une image à densité à valeurs multiples formée d'une pluralité de pixels est représentée sous la forme de données d'image binaires;

un moyen de décodage (11) destiné à décoder les données d'image binaires codées reçues pour générer une image binaire; et

un moyen de superposition (13) destiné à superposer l'image en pseudo demi-teintes, binarisée, sur l'image binaire décodée.

10. Appareil selon la revendication 8 ou 9, dans lequel ledit moyen (13) de superposition est agencé de façon à exécuter la superposition conformément à une information de région reçue par ledit moyen de réception (110).

11. Appareil selon la revendication 8, 9 ou 10, comportant un moyen de sortie sous la forme d'une imprimante agencée pour imprimer en utilisant une tête d'impression qui est agencée de façon à utiliser de l'énergie thermique pour décharger des gouttelettes d'encre par ébullition pelliculaire.

12. Procédé de traitement d'images dans un appareil de traitement d'images, le procédé comprenant:

une étape d'entrée consistant à recevoir des données d'image binaires d'entrée représentant une pluralité de pixels ayant chacun l'un ou l'autre de seulement deux états possibles;

une étape de division en régions consistant à séparer les données d'image binaires en premières données d'image et secondes données d'image;

une première étape de codage consistant à coder les premières données d'image; et

une seconde étape de codage consistant à coder les secondes données d'image,

**caractérisé en ce que**

l'étape de division en régions comprend

la division des données d'image binaires en une pluralité de blocs de données de pixels,

la détermination pour établir si un bloc est constitué de données d'image en pseudo demi-teintes qui ont été générées à partir de données d'image de valeurs multiples en fonction du nombre de pixels ayant l'un desdits états et du nombre de changements entre les premier et second états dans un bloc, et

la fourniture d'un bloc de données d'image en tant que premières données d'image pour le codage dans la première étape de codage lorsque ce bloc de données est déterminé comme étant constitué de données d'image en pseudo demi-teintes et la fourniture d'un bloc de données d'image en tant que secondes données d'image pour un codage dans ladite seconde étape de codage lorsque ce bloc de données est déterminé comme n'étant pas constitué de données d'image en pseudo demi-teintes;

**en ce que** la première étape de codage comprend la génération de données d'image à valeurs multiples à partir des données d'image binaires conformément à

$$\Sigma\Sigma P(j,i)*M(j,i)$$

où $P(j,i)$ représente la valeur d'un pixel en coordonnées j,i dans une matrice de pixels centrée sur ce pixel et est 0 pour l'un des premier et second états et 1 pour l'autre des premier et second états et $M(j, i)$ est une valeur en coordonnées j, i dans une matrice de valeurs, puis le codage des données d'image de valeurs multiples, générées, conformément à un système de codage à valeurs multiples; et

**en ce que** la seconde étape de codage comprend le codage des secondes données d'image en tant que données d'image à deux valeurs conformément à un système de codage binaire.

13. Procédé selon la revendication 12, dans lequel ladite première étape de codage exécute un codage non réversible et ladite seconde étape de codage exécute un codage réversible.

14. Procédé selon la revendication 12, dans lequel ladite première étape de codage exécute un codage non réversible d'une image bloc par bloc et ladite seconde étape de codage exécute un codage réversible de l'image ligne par ligne.

**15.** Procédé selon la revendication 12, qui comprend l'utilisation en tant que système de codage à valeurs multiples le système de codage JPEG, ou de quantification vectorielle ou orthogonal.

**16.** Procédé selon la revendication 12 ou 15, qui comprend l'utilisation, en tant que système de codage binaire, du système de codage JBIG ou MH ou MR ou MMR.

**17.** Procédé selon l'une quelconque des revendications 12 à 16, comprenant en outre une commande manuelle de ladite étape de division par régions.

**18.** Procédé selon l'une quelconque des revendications 12 à 17, comprenant en outre l'affichage d'une image binaire d'entrée sur un moyen d'affichage (51).

**19.** Procédé pour décoder une image codée en utilisant un procédé selon l'une quelconque des revendications 12 à 18, comprenant:

une étape de réception consistant à recevoir des données d'image de valeurs multiples, codées, et des données d'image binaires codées;
une étape de binarisation consistant à décoder les données d'image de valeurs multiples reçues et à générer à partir de l'image à valeurs multiples décodée une image en pseudo demi-teintes dans laquelle une image à densité à valeurs multiples formée d'une pluralité de pixels est représentée sous la forme de données d'image binaires;
une étape de décodage consistant à décoder les données d'image binaire codées reçues pour générer une image binaire; et
une étape de superposition consistant à superposer l'image en pseudo demi-teinte, binarisée, sur l'image binaire décodée.

**20.** Procédé selon l'une quelconque des revendications 12 à 18, comprenant en outre:

une étape de réception consistant à recevoir des données d'image à valeurs multiples, codées, et des données d'image binaires codées;
une étape de binarisation consistant à décoder les données d'image de valeurs multiples reçues et à générer à partir de l'image à valeurs multiples décodée une image en pseudo demi-teintes dans laquelle une image à densité à valeurs multiples formée d'une pluralité de pixels est représentée sous la forme de données d'image binaires;
une étape de décodage consistant à décoder les données d'image binaire codées reçues pour générer une image binaire; et
une étape de superposition consistant à superposer l'image en pseudo demi-teinte, binarisée, sur l'image binaire décodée.

**21.** Procédé selon la revendication 19 ou 20, dans lequel ladite étape de superposition exécute ladite superposition conformément à un information de région reçue dans ladite étape de réception.

**22.** Procédé selon la revendication 19, 20 ou 21, comprenant en outre l'impression de l'image superposée en utilisant une imprimante ayant une tête d'impression qui éjecte de l'encre en utilisant de la chaleur pour provoquer une ébullition pelliculaire.

**23.** Support de stockage informatique portant des instructions exécutables par ordinateur pour amener un ordinateur à mettre en oeuvre un procédé selon l'une quelconque des revendications 12 à 14 et 19 à 21.

# FIG.1

FIG.1

BINARY IMAGE INPUT UNIT — 1

REGION DIVIDER — 2

MULTI-VALUE GENERATION DEVICE — 3

MULTI-VALUE ENCODER — 4

BINARY ENCODER — 5

REGION DIVISION INFORMATION ENCODER (RAE) — 6

MULTIPLEXER — 7

TRANSMISSION PATH

DE-MULTIPLEXER — 8

MULTI-VALUE DECODER — 9

BINARIZER — 10

BINARY DECODER — 11

REGION DIVISION INFORMATION DECODER (RAD) — 12

BINARY IMAGE SUPERIMPOSER — 13

BINARY IMAGE OUTPUT UNIT — 14

TRANSMISSION PATH

101 102 103 104 105 106 107 108 109 110 111 112 113 114 115 116 117 118

EP 0 708 552 B1

# FIG. 2

MAIN SCAN DIRECTION

SUB SCAN DIRECTION

CORNER OFFSET VALUE

PSEUDO HALFTONE IMAGE PORTION

# FIG. 3

EP 0 708 552 B1

# FIG. 4

THE NUMBER
OF INVERSIONS

PSEUDO-EXPRESSED
HALFTONE IMAGE

BINARY IMAGE

THE NUMBER
OF BLACK PIXELS

CONTENTS OF LUT 19

# FIG. 5

| | | | | |
|---|---|---|---|---|
| 1 | 2 | 4 | 2 | 1 |
| 2 | 4 | 8 | 4 | 2 |
| 4 | 8 | 16 | 8 | 4 |
| 2 | 4 | 8 | 4 | 2 |
| 1 | 2 | 4 | 2 | 1 |

EXAMPLE OF MATRIX M ( j , i )

# FIG. 6

HEADER DATA     BINARY CODE DATA     MULTI-VALUE CODE DATA     HEADER DATA

REGION DIVISION INFORMATION DATA

|————ONE-IMAGE CORRESPONDING DATA————|

EXAMPLE OF MULTIPLEXER OUTPUTS

21

# FIG. 7

EP 0 708 552 B1

# FIG. 8

MAIN SCAN
DIRECTION

SUB SCAN
DIRECTION

DPCM
( S : 1/2 )

JPEG
( S : 1/4 )
( C : 1/8 )

MH

JBIG

JPEG
( S : 1/2 )
( C : 1/4 )

S : SUB SAMPLING RATIO
C : JPEG COMPRESSIBILITY

FIG. 9